# FASCICULE DE BREVET EUROPEEN

(11) **EP 2 801 428 B1**
(45) Date de publication et mention de la délivrance du brevet: **29.11.2017**
(21) Numéro de dépôt: 14166983.8
(22) Date de dépôt: 05.05.2014
(51) Int. Cl.: B23C 3/00, B23Q 7/04, B23Q 1/52, B23Q 1/76, B23Q 3/06

(54) **Procédé et machine d'usinage de pièces sous forme de barres avec système automatique de retournement et de remise en référence de la pièce**
Verfahren und Vorrchtung zur Bearbeitung von einem stabförmigen Gut mit einem System zur Rotation und zur neuen Einstellung des Werkstückes
Method and device for machining elongated profiles with a system of rotation and position recalibration of the workpiece

(30) Priorité: 06.05.2013 FR 1354126
(43) Date de publication de la demande: 12.11.2014
(73) Titulaire: Fives Machining, 46400 Saint-Laurent-les-Tours (FR)
(72) Inventeur: Sébal, Jean-Luc, 46600 MONVALENT (FR)
(74) Mandataire: Lavoix

(56) Documents cités:
- EP-A1- 2 172 301
- DE-A1-102010 015 651
- FR-A1- 2 792 864
- FR-A1- 2 833 196
- US-A1- 2007 199 187

## Description

### Domaine d'application de l'invention

L'invention s'applique aux machines d'usinage de pièces sous forme de barres, telles que des profilés extrudés, moulés, etc ..., et notamment aux pièces asymétriques, équipées d'au moins 2 poupées ou système équivalent permettant la rotation de la pièce autour de son axe long ainsi que son déplacement longitudinal.

L'invention peut s'appliquer notamment aux machines décrites par FR2833196, qui montre le préambule des revendications 1 et 3, mais elle s'applique aussi aux machines utilisant un principe de travail comparable (pièces usinées en l'air entre poupées ou système équivalent).

### Etat de la technique

Les machines utilisées pour ces travaux ont une morphologie particulière. Elles sont en général équipées de poupées ou de système d'embarrage permettant de positionner le profilé à usiner sous une broche de travail et de l'animer des mouvements nécessaires aux opérations de fraisage permettant de réaliser la pièce.

Ces mouvements sont des combinaisons de déplacements longitudinaux et de rotations autour de l'axe long de la pièce.

Pour usiner l'intégralité des faces d'un profilé afin d'obtenir une pièce finie, il est nécessaire de travailler en au moins 2 phases ayant des posages distincts. La première phase permet l'usinage d'une partie des surfaces en prenant référence sur deux faces brutes. La seconde permet l'usinage des faces restées brutes, après retournement de la pièce et mise en référence sur les faces préalablement usinées.

Cette opération de retournement et de remise en référence de la pièce est réalisée manuellement par l'opérateur de la machine. L'invention permet de réaliser cette opération automatiquement. Elle supprime ainsi la fatigue liée à cette opération pour l'opérateur et le risque de mauvais positionnement de la pièce après retournement. Elle permet ainsi un gain significatif de productivité.

### Description de l'invention

L'invention consiste en un procédé automatique selon la revendication 1 de changement de référentiel d'usinage, désigné dans la profession comme « auto-reverse », ou « auto-retournement », sur une machine d'usinage de pièces à partir de barres, notamment des profilés extrudés ou moulés, la pièce à usiner étant maintenue pendant son usinage par au moins deux moyens de bridage distincts et autonomes disposant chacun d'un mouvement longitudinal et d'une rotation suivant un axe parallèle à l'axe long de la pièce à usiner permettant un déplacement angulaire et longitudinal relatif de l'un par rapport à l'autre, caractérisé en ce que, pour procéder à un changement de référentiel, l'un des moyens de bridage lâche la pièce à usiner et s'en dégage suivant l'axe long de la pièce pour tourner librement autour de cet axe indépendamment de l'autre moyen de bridage, puis s'aligne angulairement sur de nouvelles références de bridage de la pièce avant de reprendre celle-ci en s'engageant suivant le même axe long de la pièce et permettre le changement de prise de l'autre moyen de bridage.

Pour simplifier la description de l'invention, nous utiliserons par la suite le terme de poupée pour désigner les dispositifs de préhension de la pièce sachant qu'elle s'applique également à tous les dispositifs de préhension permettant l'usinage des pièces en l'air entre au moins deux points de préhension. De même, nous parlerons de rotation d'une poupée lorsque nous voudrons décrire la rotation des mors de celle-ci.

Les machines d'usinage de pièces sous forme de barres comprennent 2, 3 ou 4 poupées répartis en 2 groupes. La pièce à usiner est alors tenue sur l'une de ses extrémités par un premier groupe de poupées constitué d'une ou deux poupées pendant que l'autre groupe également constitué d'une ou deux poupées assure la tenue de l'autre extrémité.

Supposons ici que la machine ne comprend que 2 poupées (dans la description détaillée de l'invention, nous traiterons un exemple de machine avec 4 poupées).

L'autonomie angulaire et linéaire des poupées permet de tenir la pièce à usiner d'un côté seulement de la machine, par exemple par la poupée 1, et de libérer la poupée 2 située du côté opposé du maintien de la pièce. La poupée 2 libérée est ensuite désynchronisée par rapport à la poupée 1, et pivote par rapport à celle-ci d'un angle programmé, par exemple de 180°. La pièce est ensuite reprise par la poupée 2 et libérée par la poupée 1. La pièce est ainsi retournée de manière automatique sur sa nouvelle référence dans la poupée 2. La poupée 1 libérée peut ensuite pivoter pour se réaligner angulairement, puis se resynchroniser en rotation sur la poupée 2. La barre est ensuite reprise par la poupée 1 et positionnée pour la suite des usinages. Ainsi, la barre a été retournée sur sa référence sans l'intervention d'un opérateur.

Comme nous venons de la voir, selon l'invention, la pièce à usiner est reprise successivement avec des référentiels de bridage différents afin d'usiner toutes les surfaces qui doivent l'être.

L'invention consiste également en une machine selon la revendication 3 d'usinage de pièces à partir de barres, notamment des profilés extrudés ou moulés, la pièce à usiner étant maintenue pendant son usinage par au moins deux moyens de bridage distincts disposant chacun d'un mouvement longitudinal et d'une rotation suivant un axe parallèle à l'axe long de la pièce à usiner, caractérisée en ce que les moyens de bridage ont une autonomie angulaire permettant une rotation relative de l'un par rapport à l'autre.

La machine selon l'invention dispose d'un système de contrôle et de commande numérique paramétrable pour automatiser l'intégralité des fonctions de programmation, de pivotement du vecteur d'origine, de décalages, et de routines machine.

### Description détaillée d'un exemple de mise en oeuvre de l'invention

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
- Figure 1 est une représentation schématique longitudinale d'une machine selon l'invention dans un premier état correspondant à l'usinage d'une pièce placée sur un premier référentiel,
- Figure 2 est une représentation schématique transversale montrant une coupe de la pièce en appui sur le premier référentiel de la figure 1,
- Figure 3 est une représentation schématique longitudinale similaire à la Fig.1, dans laquelle un changement de référentiel est en cours, la pièce à usiner étant alors maintenue par les poupées 2 et 6,
- Figure 4 est une représentation schématique transversale similaire à la Fig. 2, dans laquelle un changement de référentiel est en cours, la pièce à usiner étant alors maintenue par les poupées 2 et 6,
- Figure 5 est une représentation schématique longitudinale similaire à la Fig.3, dans une autre phase du changement de référentiel en cours, la pièce à usiner étant alors maintenue par les poupées 1 et 5,
- Figure 6 est une représentation schématique transversale similaire à la Fig. 4, dans une autre phase du changement de référentiel en cours, la pièce à usiner étant alors maintenue par les poupées 1 et 5,
- Figure 7 est une représentation schématique longitudinale similaire à la Fig.1, dans un second état correspondant à l'usinage des autres surfaces de la pièce placée sur un second référentiel, celle-ci étant alors de nouveau maintenue par les quatre poupées,
- Figure 8 est une représentation schématique transversale montrant une coupe d'une pièce asymétrique en appui sur un premier référentiel,
- Figure 9 est une représentation schématique transversale similaire à la Fig.8, dans laquelle un changement de référentiel est en cours,
- Figure 10 est une représentation schématique transversale similaire à la Fig.8, après le changement de référentiel,
- Figure 11 est une représentation schématique transversale montrant une coupe d'une pièce asymétrique en appui sur un premier référentiel pour un usinage dit « en agrafe »,
- Figure 12 est une représentation schématique transversale similaire à la Fig.11, après la fin d'une première opération d'usinage,
- Figure 13 est une représentation schématique transversale similaire à la Fig.12, dans laquelle un changement de référentiel est en cours,
- Figure 14 est une représentation schématique transversale similaire à la Fig.12, après le changement de référentiel, et
- Figure 15 est une représentation schématique transversale similaire à la Fig.12, après la fin de la seconde opération d'usinage.

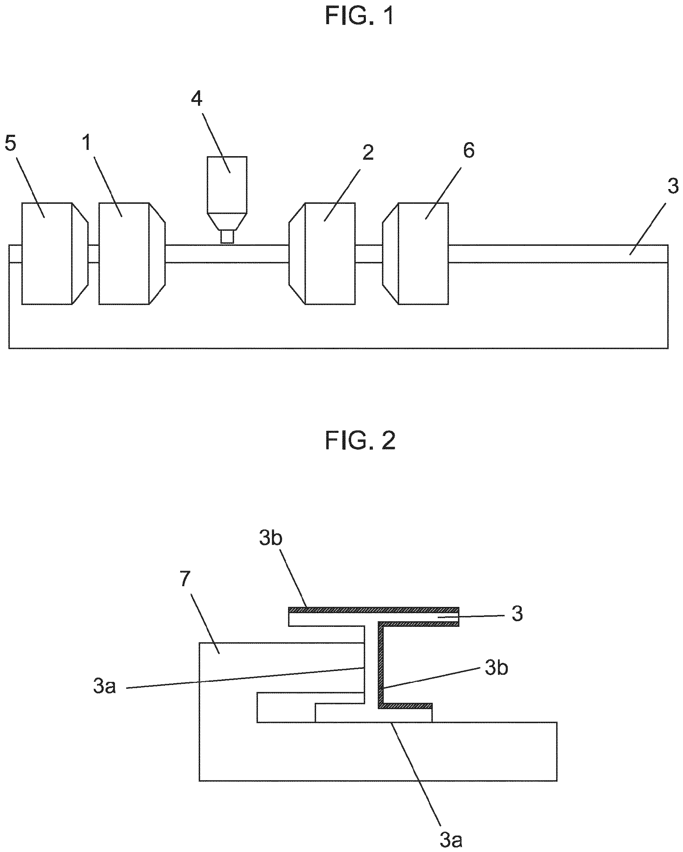

Les figures 1 à 7 permettent de voir schématiquement représentées les étapes successives de fonctionnement du système automatique de retournement et de remise en référence d'une pièce à usiner, un élément profilé, selon l'invention.

Sur ces figures très schématiques, seules les poupées 1, 2, 5, 6, la pièce à usiner 3 et un outil d'usinage 4 sont représentés car ils suffisent à la compréhension de l'invention.

Les poupées 1 et 2 permettent de maintenir la pièce à usiner au voisinage de l'outil de coupe de sorte de limiter la flèche de la pièce entre ses points d'appuis et d'améliorer la qualité d'usinage. Elles disposent de moyens de rotation autour de l'axe long de la pièce 3 mais pas nécessairement de moyens de déplacements longitudinaux le long de cet axe long. Nous supposons ici que ces poupées 1 et 2 disposent de moyens de déplacements longitudinaux. Les poupées 5 et 6 disposent de moyens de rotation autour de l'axe long de la pièce 3 et de moyens de déplacements longitudinaux le long de cet axe long. Elles assurent le déplacement de la pièce 3 sous l'outil 4.

Pour une description détaillée du mode de fonctionnement de la machine, nous vous renvoyons vers le brevet FR2833196 de la demanderesse.

En Fig. 1, la pièce 3 est représentée dans une première phase d'usinage. Elle est maintenue sur un premier référentiel par les 4 poupées, avec par exemple une fixation à solidarisation assurée par la poupée 6 et une fixation à glissement assurée par les autres poupées 1, 2 et 5.

En Fig. 2, est représentée plus en détail la pièce 3 avec ses surfaces 3a utilisées comme premier référentiel en appui sur les mors fixes 7 de la poupée 2 pour l'usinage des surfaces 3b.

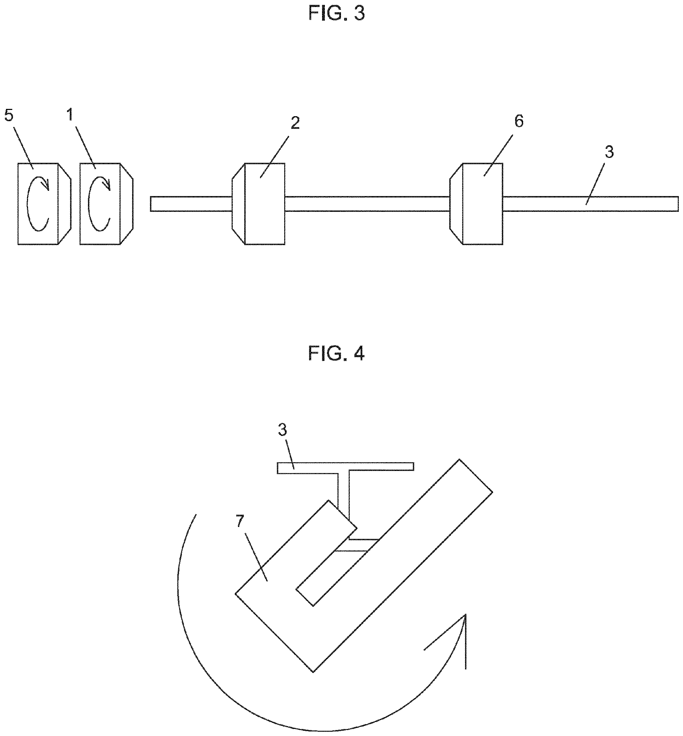

Comme représenté en Fig. 3, l'usinage de cette première phase terminé, la pièce 3 est libérée des poupées 1 et 5 de sorte de permettre la rotation de celles-ci. Elle reste alors maintenue sur le premier référentiel au moyen des poupées 2 et 6. La Fig. 4 illustre la rotation des poupées 1 et 5 par rapport à la pièce 3.

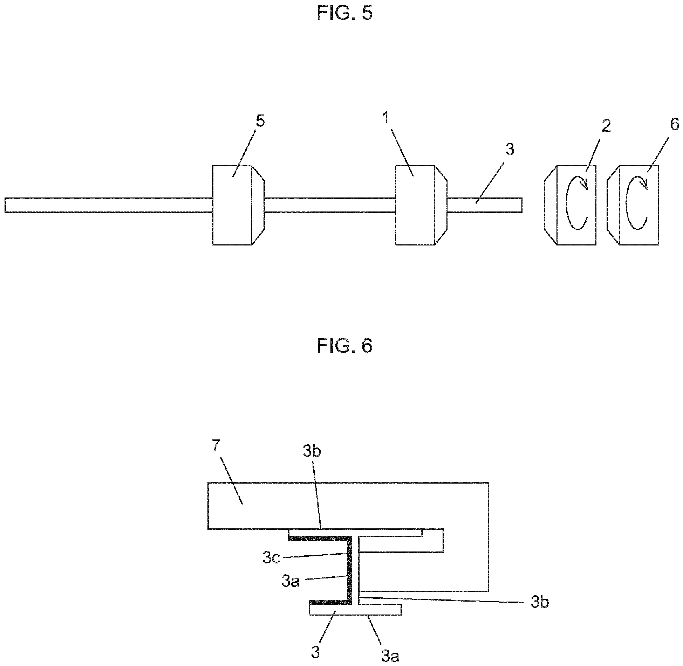

Une fois la rotation des poupées 1 et 5 terminée, la pièce 3 est transférée des poupées 2 et 6 aux poupées 1 et 5. Les figures 5 et 6 illustrent la position de la pièce 3 à la fin de ce transfert. Les poupées 2 et 6 peuvent alors être à leur tour animées d'un mouvement de rotation pour venir se positionner angulairement comme les poupées 1 et 5.

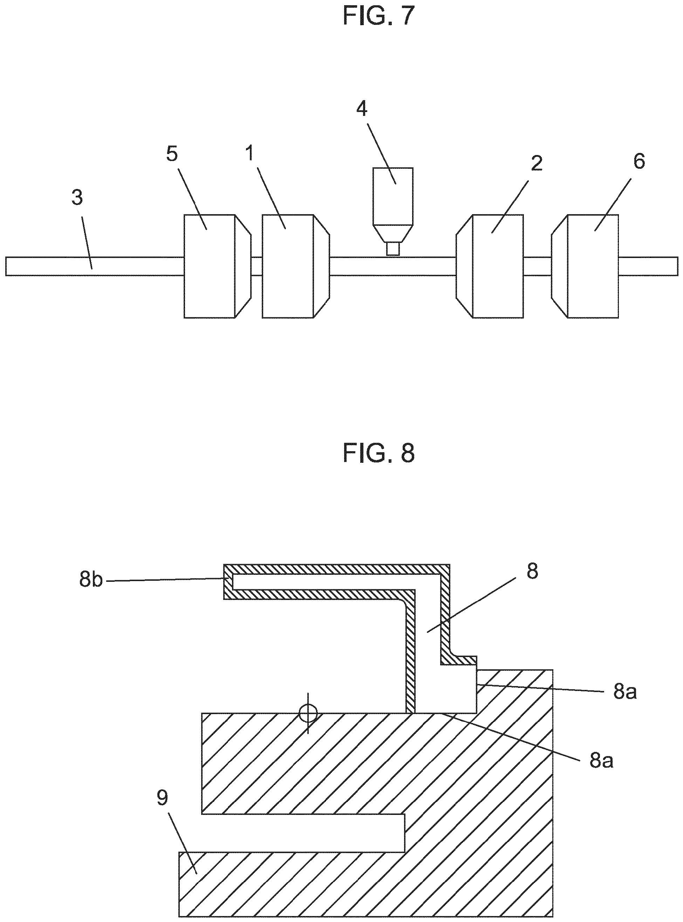

Ensuite, comme représenté en Fig. 7, la pièce 3 est glissée vers les poupées 2 et 6 jusqu'à sa position de début d'usinage.

Ce premier exemple représente le cas typique d'usinage en mode « auto-reverse » d'un profil symétrique. Ce principe peut être étendu à des profils « asymétriques » ou « exotiques » ne permettant pas un pivotement axé selon le centre de symétrie de la pièce à usiner.

L'exemple suivant, représenté sur les figures 8 à 10, concerne une pièce asymétrique 8.

En Fig. 8, la pièce 8 est représentée dans une première phase d'usinage. Elle est maintenue sur un premier référentiel constitué par ses surfaces 8a par les 4 poupées, avec par exemple une fixation à solidarisation assurée par la poupée 6 et une fixation à glissement assurée par les autres poupées 1, 2 et 5. Cette phase permet l'usinage de l'ensemble des surfaces 8b. A la fin de cette séquence d'usinage, la pièce reste maintenue à la poupée 6 alors que les poupées 1, 2 et 5 se libèrent de sorte de permettre la rotation de leur mors autour de la pièce.

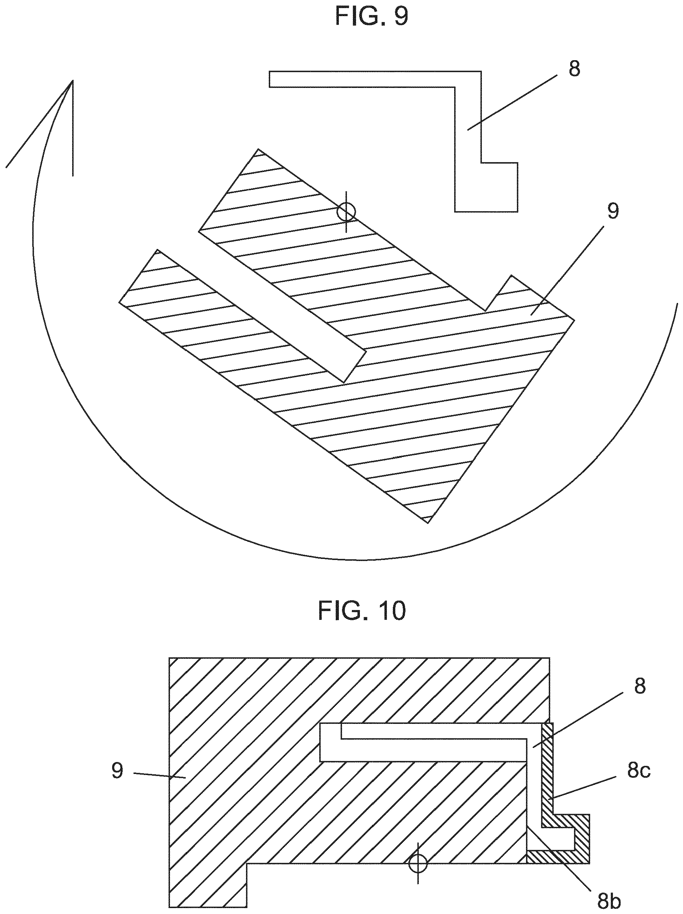

La Fig. 9 illustre ainsi la rotation des poupées 1, 2 et 5 après l'usinage des surfaces 8b de sorte de changer de référentiel.

Comme représenté en Fig.10, à la fin de la rotation des poupées 1, 2 et 5, la pièce 8 est reprise sur ces poupées avec un nouveau référentiel permettant l'usinage des surfaces 8c. La poupée 6 libère ensuite la pièce 8 et vient se positionner sur le même référentiel que les poupées 1, 2 et 5, et l'usinage peut se poursuivre.

Comme nous venons de le voir, selon l'invention, plusieurs zones de référencement peuvent être définies sur un même support fixe, agencées autour du centre de rotation des poupées. Il est possible :
- d'usiner une pièce complexe en redéfinissant pour chaque opération le référentiel le plus adapté,
- d'usiner des épaisseurs supérieures à la course maxi des mors de bridage (à chaque posage, on dispose de la course totale des mors sur le nouveau référentiel) opération impossible en fonction «auto-reverse » classique.

L'invention permet également de mettre en oeuvre en une seule opération l'usinage dit « en agrafe » de pièces complexes, en définissant un premier posage sur lequel la pièce est ébauchée, et en usinant des « rails de guidage » directement sur le profilé brut ou semi-fini.

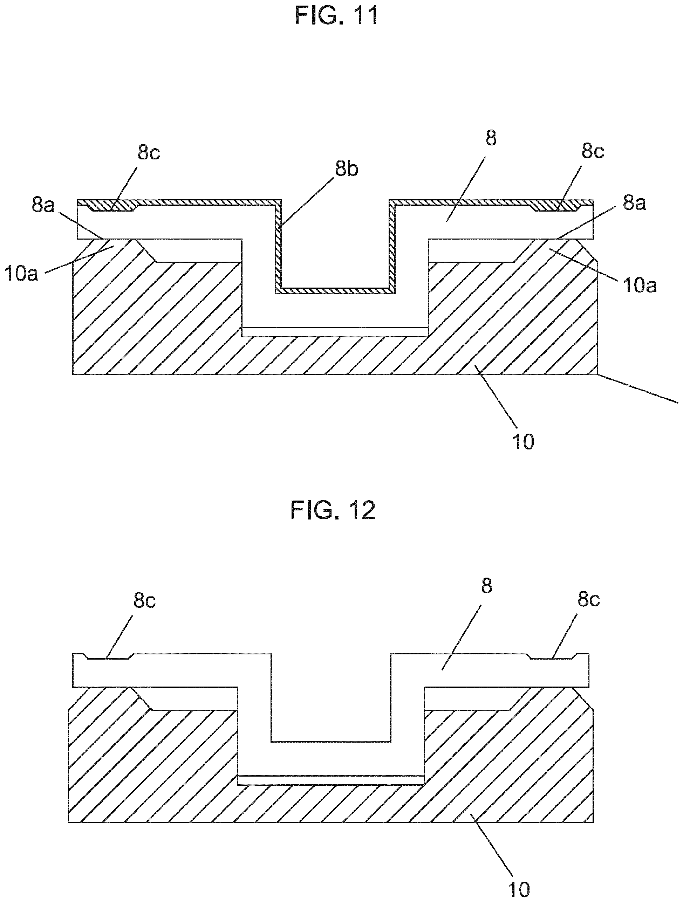

Les figures 11 à 15 illustrent un exemple d'usinage en agrafe selon l'invention. Comme représenté sur la Fig. 11, la pièce à usiner 8 est dans un premier temps tenue sur un premier référentiel 8a de sorte de permettre l'usinage des surfaces 8b et notamment de deux « rails » 8c destinés à venir ultérieurement se placer dans les posages 10a du support 10. Après usinage de cette première phase, nous obtenons la pièce 8 représentée en Fig. 12.

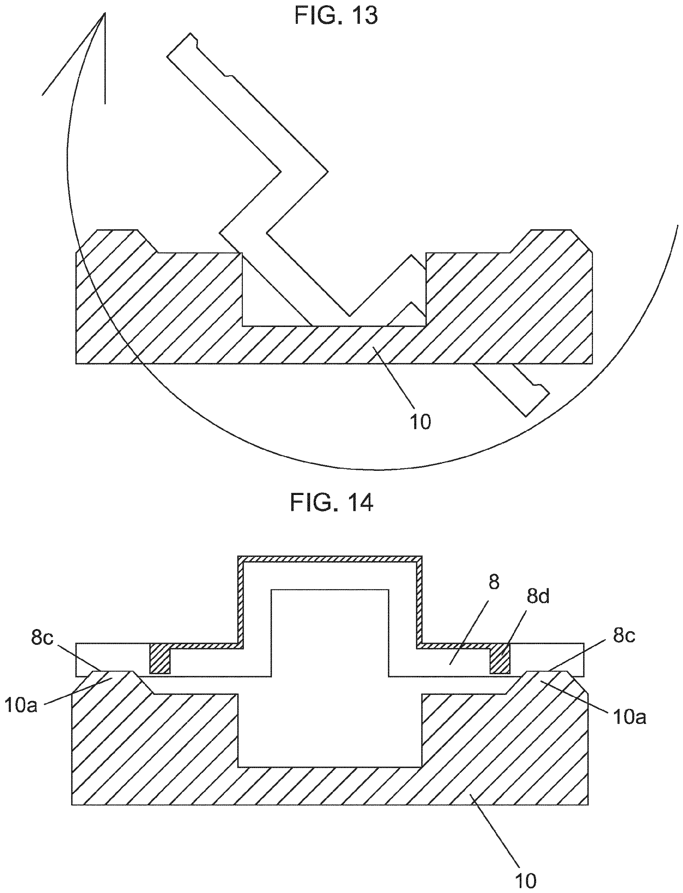

Comme représenté en Fig. 13, la pièce 8 est ensuite retournée de sorte de la placer automatiquement sur un second référentiel selon le procédé "auto-reverse" de l'invention.

Le deuxième posage consiste à guider et/ou brider les « rails » 8 c préalablement usinés automatiquement dans les posages 10a étudiés à cet effet, servant de référence précise pour la finition de la pièce. Il est alors possible d'usiner les surfaces 8d.

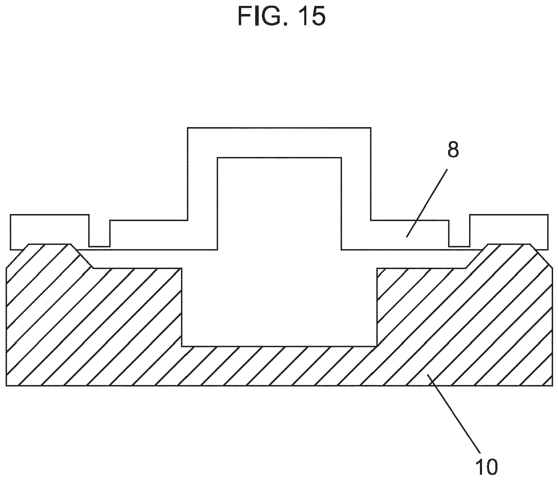

La figure 15 représente la pièce après la dernière opération de prédécoupe de la pièce de ses extrémités faisant office de surfaces de référence. L'opérateur, ou un système automatisé, n'a plus alors qu'à détacher les références de la pièce pour obtenir une pièce finie.

## Revendications

1. Procédé automatique de changement de référentiel d'usinage sur une machine d'usinage de pièces à partir de barres, notamment des profilés extrudés ou moulés, la pièce (8) à usiner étant maintenue pendant son usinage par au moins deux moyens de bridage distincts et autonomes (1, 2, 5, 6) disposant chacun d'un mouvement longitudinal et d'une rotation suivant un axe parallèle à l'axe long de la pièce à usiner permettant un déplacement angulaire et longitudinal relatif de l'un par rapport à l'autre, **caractérisé en ce que**, pour procéder à un changement de référentiel, l'un des moyens de bridage (1, 2, 5, 6) lâche la pièce à usiner et s'en dégage pour tourner librement autour de l'axe long de la pièce indépendamment de l'autre moyen de bridage, puis s'aligne angulairement sur de nouvelles références de bridage de la pièce avant de reprendre celle-ci et permettre le changement de prise de l'autre moyen de bridage (1, 2, 5, 6).

2. Procédé selon la revendication 1, **caractérisé en ce que** la pièce (8) à usiner est reprise successivement avec des référentiels de bridage différents afin d'usiner toutes les surfaces qui doivent l'être.

3. Machine d'usinage de pièces à partir de barres, notamment des profilés extrudés ou moulés, la pièce (8) à usiner étant maintenue pendant son usinage par au moins deux moyens de bridage distincts (1, 2, 5, 6) disposant chacun d'un mouvement longitudinal et d'une rotation suivant un axe parallèle à l'axe long de la pièce à usiner, **caractérisée en ce que** les moyens de bridage ont une autonomie angulaire permettant une rotation relative de l'un par rapport à l'autre.

## Patentansprüche

1. Automatisches Verfahren zum Wechseln eines Bearbeitungsbezugssystems an einer Bearbeitungsmaschine von Teilen aus Stangen, insbesondere von extrudierten oder gegossenen Profilen, wobei das zu bearbeitende Teil (8) während seiner Bearbeitung von mindestens zwei unterschiedlichen und unabhängigen Spannmitteln gehalten wird, die jeweils über eine Längsbewegung und eine Drehung gemäß einer Achse parallel zur Langachse des zu bearbeitenden Teils verfügen, wobei eine Winkel- und Längsverschiebung relativ zueinander ermöglicht wird, **dadurch gekennzeichnet, dass**, um einen Wechsel des Bezugssystems vorzunehmen, eines der Spannmittel (1, 2, 5, 6) das zu bearbeitende Teil loslässt und sich davon befreit, um frei um die Langachse des Teils unabhängig von dem anderen Spannmittel zu drehen, dann sich winkelmäßig auf neue Spannreferenzen des Teils ausrichtet, bevor dieses wieder aufgenommen wird und der Wechsel des Greifens des anderen Spannmittels (1, 2, 5, 6) gestattet wird.

2. Verfahren nach Anspruch 1, **dadurch gekennzeichnet, dass** das zu bearbeitende Teil (8) aufeinanderfolgend mit unterschiedlichen Spannbezugsystemen ergriffen wird, um alle zu bearbeitenden Flächen zu bearbeiten.

3. Bearbeitungsmaschine von Teilen aus Stangen, insbesondere von extrudierten oder gegossenen Profilen, wobei das zu bearbeitende Teil (8) während seiner Bearbeitung durch mindestens zwei unterschiedliche Spannmittel (1, 2, 5, 6) gehalten wird, die jeweils über eine Längsbewegung und eine Drehung gemäß einer Achse parallel zur Langachse des zu bearbeitenden Teils verfügt, **dadurch gekennzeichnet, dass** die Spannmittel eine Winkelunabhängigkeit aufweisen, die eine Drehung relativ zueinander gestattet.

## Claims

1. Automatic method for changing machining frame of reference on a machine for machining parts from bars, particularly extruded or moulded profiles, the part (8) to be machined being held during machining by at least two different and independent clamping means (1, 2, 5, 6) each having a longitudinal movement and a rotation along an axis parallel to the long axis of the part to be machined, enabling an angular and longitudinal movement relative one to another, **characterised in that**, in order to proceed with a change of the frame of reference, one of the clamping means (1, 2, 5, 6) releases the part to be machined and is disengaged therefrom in order to turn freely around the long axis of the part independent of the other clamping means, then is angularly aligned on new clamping references of the part prior to re-clamping it to allow the change of hold of the other clamping means (1, 2, 5, 6).

2. Method according to claim 1, **characterised in that** the part (8) to be machined is re-clamped successively with different clamping references in order to machine all the surfaces intended for machining.

3. Machine for machining parts from bars, particularly extruded or moulded profiles, the part (8) to be machined being held during machining by at least two different clamping means (1, 2, 5, 6) each having a longitudinal movement and a rotation along an axis parallel to the long axis of the part to be machined, **characterised in that** the clamping means are angularly independent, enabling a rotation of one relative to the other.
